# EUROPÄISCHE PATENTSCHRIFT

(11) **EP 0 819 842 B1**
(45) Veröffentlichungstag und Bekanntmachung des Hinweises auf die Patenterteilung: **26.09.2001**
(21) Anmeldenummer: 97111045.7
(22) Anmeldetag: 02.07.1997
(51) Int. Cl.: F02K 1/82, F01D 25/30, F02C 7/24, F02K 1/80

(54) **Vorrichtung zum Befestigen eines Abdeckbleches im Rauchgaskanal einer Gasturbine**
Fixing element for liner panels of a gas turbine exhaust gas channel
Dispositif de fixation pour des panneaux de revêtement d'un canal pour les gaz d'échappement d'une turbine à gaz

(30) Priorität: 15.07.1996 DE 19628505
(43) Veröffentlichungstag der Anmeldung: 21.01.1998
(73) Patentinhaber: SIEMENS AKTIENGESELLSCHAFT, 80333 München (DE)
(72) Erfinder: Bähr, Siegfried, 91330 Eggolsheim (DE); Lorenz, Dirk, Dipl.-Ing., 91058 Erlangen (DE)

(56) Entgegenhaltungen:
- FR-A- 2 378 176
- GB-A- 2 279 411
- GB-A- 2 285 477
- US-A- 2 919 549
- PATENT ABSTRACTS OF JAPAN vol. 009, no. 014 (M-352), 22.Januar 1985 & JP 59 162323 A (HITACHI SEISAKUSHO KK;OTHERS: 01), 13.September 1984,
- "Insulating Gas Turbine Heat Recovery Exhaust Duct" DIESEL & GAS TURBINE WORLDWIDE, Oktober 1985, BROOKFIELD, WI.; USA, Seite 10 XP002044245

## Beschreibung

Vorrichtung zum Befestigen einer Anzahl von Abdeckblechen im Rauchgaskanal einer Gasturbine.

Die Erfindung bezieht sich auf eine Vorrichtung zum Befestigen von im Rauchgaskanal einer Gasturbine vorgesehenen Abdeckblechen.

Eine Gasturbine wird in vielen Bereichen zum Antrieb eines Generators oder einer Arbeitsmaschine eingesetzt. Dabei wird der Energiegehalt eines Brennstoffs zur Erzeugung einer Rotationsbewegung der Turbinenwelle genutzt. Ein bei der Verbrennung des Brennstoffs entstehendes Arbeitsmittel oder heißes Gas wird dazu in der Gasturbine entspannt und sodann als Abgas oder Rauchgas einem an die Gasturbine angeschlossenen Rauchgaskanal zugeführt.

Der Rauchgaskanal der Gasturbine umfaßt üblicherweise mehrere miteinander verbundene Komponenten. Je nach Auslegung und Einsatzart der Gasturbine sind als Komponenten ein Diffusor, ein Kompensator und/oder weitere Elemente, wie z.B. ein Abgaskamin, vorgesehen.

Jede Komponente wird beim Betrieb der Gasturbine üblicherweise durch das sie durchströmende Abgas oder Rauchgas aufgeheizt, wobei sich das Rauchgas entlang der Rauchgasrichtung durch Wärmeaustausch mit den jeweiligen Komponenten abkühlt. Bedingt durch die starken Temperaturbelastungen wird jede Komponente im Innenraum mittels Isolationsmaterial isoliert, das zwischen Abdeckschindeln oder Abdeckblechen und der Außenwand des Rauchgaskanal gehalten ist.

Zum Befestigen der Abdeckbleche sind bolzenförmige Halteelemente vorgesehen, wobei die Abdeckbleche mittels Halteblechen niedergehalten werden. Darüber hinaus werden die Haltebleche mit einem über die Abdeckbleche und die Haltebleche hinausstehenden Teil des Halteelements verschweißt. Aufgrund der starken Temperaturbelastung und des Rauchgasstromes kommt es zu einer Vibration der undefiniert vorgespannten Abdeckbleche und somit zu einer Momentbelastung der Schweißstelle, die zu Beschädigungen der Schweißnaht führen kann. Eine Beschädigung der Schweißnaht kann zu einem Abfallen der Haltebleche und damit zu einem Herausreißen der Abdeckbleche führen. Diese Beschädigungen haben aufgrund von Reparaturarbeiten eine Verringerung der Betriebszeiten der Gasturbine zur Folge. Dies führt zu einer äußerst unerwünschten Reduzierung der Verfügbarkeit der gesamten Gasturbinenanlage.

Der Erfindung liegt daher die Aufgabe zugrunde, eine besonders geeignete Vorrichtung zum Befestigen eines im Rauchgaskanal einer Gasturbine vorgesehenen Abdeckbleches anzugeben. Dabei soll ein besonders einfach aufgebautes Befestigungselement eine sichere Halterung der Abdeckbleche gewährleisten.

Bezüglich der Vorrichtung wird die Aufgabe erfindungsgemäß gelöst durch die Merkmale des Anspruchs 1.

Zwar ist aus dem Patent Abstract of Japan, Vol. 009, no. 014 (M-352), JP 59162323, ein Bolzenelement mit zwei daran unter spaltbildung befestigten Halteplatten bekannt. Jedoch dient dieses Element als Atmungsmechanismus zum Ausgleich von Druckänderungen, wozu eine Isolierplatte eines Gasturbinengehäuses unter Bildung eines Luftkanals mit ausreichandem Spiel zwischen den beiden zueinander beabstandeten Halteplatten angeordnet ist. Die Erfindung geht von der Überlegung aus, für eine hohe Verfügbarkeit der Gasturbine ein einfach aufgebautes Befestigungselement zu verwenden, mit dem das Abdeckblech sowohl definiert vorgespannt als auch befestigt werden kann. Dies kann dadurch erfolgen, daß als Befestigungselement ein entlang eines Schafts des Halteelements führbarer Haltering eingesetzt wird, mit dem das Abdeckblech sicher gehalten werden kann. Dabei sollte die Geometrie des Halterings derart gewählt werden, daß sowohl ein Formschluß als auch eine möglichst geeignete Aufnahme einer Schweißnaht gewährleistet sind.

Um den formschlüssig um ein Halteelement angeordneten Haltering Haltering mit dem Halteelement verbinden zu können, wird dieser mit einer Schweißnaht am Halteelement befestigt. Dabei weist der Haltering vorzugsweise eine konische Ausnehmung zur Aufnahme einer Schweißnaht auf. Das Halteelement ist zweckmäßigerweise ein Verbindungsbolzen zwischen dem Abdeckblech und einer Außenwand des Rauchgaskanals. Darüber hinaus ist das Halteelement vorzugsweise im Bereich mindestens zweier sich überlappender Abdeckbleche angeordnet.

Damit die Abdeckbleche in einfacher Weise auf das Halteeelement aufgebracht werden können, weist das Halteelement im Bereich zwischen dem Abdeckblech und der Außenwand einen größeren Durchmesser auf, als im Bereich zwischen dem Haltering und dem Abdeckblech.

Der Haltering als besonders geeignetes Befestigungselement ist vorteilhafterweise im Querschnitt kreisringförmig ausgebildet und weist eine Anzahl von Abschnitten mit stufenweise zunehmendem Durchmesser auf. Durch diese Geometrie des Halterings können die Abdeckbleche in einer definierten Position niedergehalten werden.

Damit der Haltering in einem Bereich zwischen zwei Abdeckblechen angeordnet und geführt werden kann, weist der Haltering einen ersten Abschnitt mit einem ersten Durchmesser auf. Um mindestens zwei zu befestigende Abdeckbleche niederhalten zu können, weist der Haltering darüber hinaus einen zweiten Abschnitt mit einem zweiten, vorzugsweise größeren Durchmesser auf. Zur Bildung eines Freiraumes im Bereich zwischen zwei Abschnitten weist der Haltering ferner einen dritten Abschnitt mit einem dritten größeren Durchmesser auf. In vorteilhafter Ausgestaltung weist der Haltering auf einer Seite im Lochbereich eine konische Ausnehmung auf.

Der Haltering besteht zweckmäßigerweise aus einem austenitischen Material und ist daher vorteilhafterweise besonders temperaturbeständig. Vorzugsweise wird ein mit einem Gehalt von etwa 12 % Chrom und etwa 8 % Nickel versetzter Edelstahl als Material verwendet.

Die mit der Erfindung erzielbaren Vorteile bestehen insbesondere darin, daß durch die formschlüssige und definiert vorgespannte Anordnung des Halteringes um das Halteelement Vibrationen von Abdeckblechen reduziert sind. Darüber hinaus ist durch die Führung des Halteringes am Schaft und durch die Geometrie des Halterings die Schweißnaht momentfrei, d.h. die Schweißnaht nimmt lediglich abhebende Lasten durch die Abdeckbleche auf. Somit sind aus unterschiedlichen thermischen Belastungen und Dehnungen der Abdeckbleche resultierende Schäden der Befestigungen sowie Verbiegungen oder ein Herausreißen der Abdeckbleche vermieden. Damit ist die zulässige Betriebszeit der Gasturbine erhöht, was eine längere Verfügbarkeit bedingt.

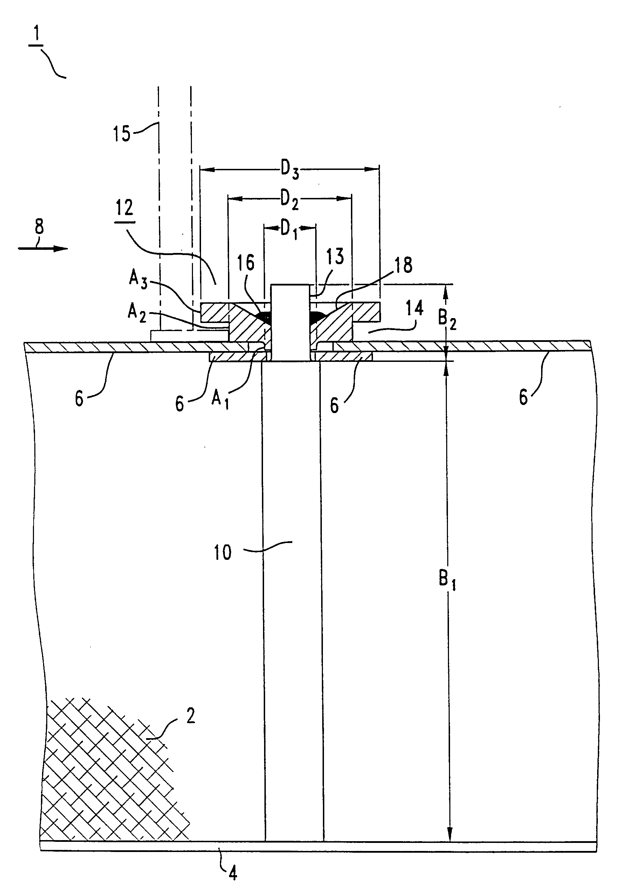

Ein Ausführungsbeispiel der Erfindung wird anhand einer Zeichnung näher erläutert. Darin zeigt die Figur in einer Seitenansicht einen Ausschnitt aus einem Rauchgaskanal mit einen um ein Halteelement angeordneten Haltering.

Die Figur zeigt einen Ausschnitt aus einem Rauchgaskanal 1 einer Gasturbinenanlage mit einer Isolierung 2 zwischen einer Außenwand 4 und einer Anzahl von etwa parallel dazu angeordneten Abdeckblechen 6, von denen zwei sichtbar sind. Diese sind während des Betriebs der Gasturbinenanlage einem durch einen Pfeil 8 angedeuteten Rauchgasstrom ausgesetzt. Die Abdeckbleche 6 stützen sich über ein Halteelement oder einen Verbindungsbolzen 10 gegen die Außenwand 4 ab. Dabei weist der Verbindungsbolzen 10 in einem Bereich B₁ zwischen dem Abdeckblech 6 und der Außenwand 4 einen größeren Durchmesser auf, als im über dem Abdeckblech 6 hinausstehenden Bereich B₂. Die Länge des Bereiches B₁ entspricht der Dicke der Isolierung 2.

Zum Niederhalten der Abdeckbleche 6 ist ein Haltering 12 vorgesehen, der in dem Bereich B₂ über einen Schaft 13 des Verbindungsbolzens 10 geführt ist. Dabei ist der Haltering 12 formschlüssig mit dem Schaft 13 und somit mit dem Verbindungsbolzen 10 verbunden.

Der Haltering 12 weist einen ersten Abschnitt A₁ mit einem ersten Durchmesser D₁ auf, wobei dieser Abschnitt A₁ zwischen die Abdeckbleche 6 geführt, insbesondere gepreßt, ist. Dadurch ist eine Hebelwirkung beim Anpressen des Halterings 12 vermieden. Dabei kann der erste Abschnitt A1 einerseits zwischen die in mehreren Schichten übereinander liegenden Abdeckbleche 6 gepreßt sein. Andererseits kann dieser auf die direkt auf dem Verbindungsbolzen 10 aufliegenden Abdeckbleche 6 gesetzt sein.

Ein zweiter Abschnitt A₂ mit einem im Vergleich zum Durchmesser D₁ größeren Durchmesser D₂ setzt zum Niederhalten der Abdeckbleche 6 unmittelbar auf diese auf. Darüber hinaus weist der Haltering 12 einen dritten Abschnitt A₃ mit einem im Vergleich zum Durchmesser D₂ größeren Durchmesser D₃ auf, um einen Freiraum 14 zwischen den Abdeckblechen 6 und dem dritten Abschnitt A₃ des Halteringes 12 zu bilden. Der Freiraum 14 dient beispielsweise zum Ansetzen von Schenkeln 15, die Teil einer nicht näher dargestellten Anpreßvorrichtung sind.

Nach Aufbringen und Anpressen des Halteringes 12 auf die Abdeckbleche 6 wird der Haltering 12 mit dem Verbindungsbolzen 10 verschweißt. Dabei wird eine Schweißnaht 16 vorteilhafterweise in eine konische Ausnehmung 18 des Halteringes 12 eingebracht. Dadurch, daß der Haltering 12 definiert vorgespannt ist, ist die Schweißnaht 16 momentfrei. Mit anderen Worten: Aus dem vertikalen Verdrehen der Abdeckbleche 6 resultierende und auf die Schweißnaht 16 wirkende Drehmomente sind vermieden.

Durch das Anpressen des Abdeckbleches 6 auf den Verbindungsbolzen 10 mittels des Halteringes 12 und dessen formschlüssiges Sitzen auf den Verbindungsbolzen 10 ist das Abdeckblech 6 definiert vorgespannt, so daß auftretende Vibrationen reduziert sind. Darüber hinaus ist die von der konischen Ausnehmung 18 im Haltering 12 aufgenommene Schweißnaht 16 momentfrei, so daß die Schweißnaht 16 nur noch abhebende Lasten der Abdeckbleche 6 aufnehmen muß. Somit werden durch Temperaturbelastungen bedingte Beschädigungen der Schweißnaht 16 praktisch reduziert.

## Patentansprüche

1. Vorrichtung zum Befestigen einer Anzahl von im Rauchgaskanal (1) einer Gasturbine vorgesehenen Abdeckblechen (6), die sich gegen eine Außenwand (4) des Rauchgaskanals (1) über ein Halteelement (10) abstützen, an dessen über die Abdeckbleche (6) hinausstehenden Schaft (13) ein eine Anzahl von Abschnitten (A₁,A₂,A₃) mit stufenweise zunehmendem Durchmesser (D₁,D₂ bzw. D₃) aufweisender Haltering (12) gehalten ist, wobei ein erster Abschnitt (A₁) mit einem ersten Durchmesser (D₁) zwischen zwei Abdeckbleche (6) geführt und zwischen einem zweiten Abschnitt (A₂) mit einem im Vergleich zum ersten Durchmesser (D₁) großen zweiten Durchmesser (D₂) zur Auflage auf mindestens zwei Abdeckblechen (6) sowie einem dritten Abschnitt (A₃) mit einem im Vergleich zum zweiten Durchmesser (D₂) großen dritten Durchmesser (D₃) ein Freiraum (14) gebildet ist.

2. Vorrichtung nach Anspruch 1, wobei der Haltering (12) formschlüssig mit dem Halteelement (10) verbunden ist und auf einer Seite im Lochbereich eine konische Ausnehmung (18) zur Aufnahme einer Schweißnaht (16) aufweist.

3. Vorrichtung nach Anspruch 1 oder 2, wobei das Halteelement (10) im Bereich (B1) zwischen den Abdeckblechen (6) und der Außenwand (4) einen größeren Durchmesser aufweist, als im über den Abdeckblechen (6) hinausstehenden Bereich (B₂).

4. Vorrichtung nach einem der Ansprüche 1 bis 3, wobei der Haltering (12) im Querschnitt kreisringförmig ausgebildet ist.

5. Vorrichtung nach einem der Ansprüche 1 bis 4, wobei das Material des Halterings (12) austenitisch ist.

6. Vorrichtung nach einem der Ansprüche 1 bis 5, wobei das Material des Halterings (12) mit einem Gehalt von etwa 12% Chrom und etwa 8% Nickel versetzt ist.

## Claims

1. Device for fixing a number of cover plates (6), which are provided in the flue-gas duct (1) of a gas turbine and are supported against an outer wall (4) of the flue-gas duct (1) by means of a holding element (10), on the shank (13) of which, which protrudes beyond the cover plates (6), a holding ring (12) having a number of sections (A₁, A₂, A₃) with a diameter (D₁, D₂, D₃) that increases in steps is held, a first section (A₁) with a first diameter (D₁) being guided between two cover plates (6), and a free space (14) being formed between a second section (A₂) with a second diameter (D₂), which is large compared with the first diameter (D₁), to allow it to rest on at least two cover plates (6), and a third section (A₃) with a third diameter (D₃), which is large compared with the second diameter (D₂).

2. Device according to Claim 1, the holding ring (12) being connected to the holding element (10) in a form-locking manner and having a conical recess (18) to accommodate a weld seam (16) on one side in the region of the hole.

3. Device according to Claim 1 or 2, the holding element (10) having a larger diameter in the region (B₁) between the cover plates (6) and the outer wall (4) than in the region (B₂) that projects beyond the cover plates (6).

4. Device according to one of Claims 1 to 3, the holding ring (12) being of annular design in cross section.

5. Device according to one of Claims 1 to 4, the material of the holding ring (12) being austenitic.

6. Device according to one of Claims 1 to 5, the material of the holding ring (12) having about 12% chromium and about 8% nickel added to it.

## Revendications

1. Dispositif pour fixer une pluralité de tôles (6) de revêtement qui sont prévues dans la canalisation (1) de gaz de fumée d'une turbine à gaz et qui prennent appui sur une paroi (4) extérieure de la canalisation (1) de gaz de fumée par l'intermédiaire d'un élément (10) de maintien, sur lequel un anneau (12) de maintien comportant une pluralité de tronçons (A₁, A₂, A₃) à diamètre (D₁, D₂ et D₃) augmentant par paliers est maintenu par l'intermédiaire d'une tige (13) faisant saillie des tôles (6) de revêtement, un premier tronçon (A₁) ayant un premier diamètre (D₁) étant guidé entre deux tôles (6) de revêtement et une zone (14) libre étant formée entre un deuxième tronçon (A₂) ayant un deuxième diamètre (D₂) grand comparé au premier diamètre (D₁), pour le montage sur au moins deux tôles (6) de revêtement, et un troisième tronçon (A₃) ayant un troisième diamètre (D₃) grand comparé au deuxième diamètre (D₂).

2. Dispositif suivant la revendication 1, l'anneau (12) de maintien étant relié avec complémentarité de forme à l'élément (10) de maintien et comportant d'un côté, dans la région perforée, un évidement (18) conique pour la réception d'un cordon (16) de soudure.

3. Dispositif suivant la revendication 1 ou 2, l'élément (10) de maintien comportant dans la région (B₁), entre les tôles (6) de revêtement et la paroi (4) extérieure, un diamètre plus grand que dans la région (B₂) faisant saillie au-dessus des tôles (6) de revêtement.

4. Dispositif suivant l'une des revendications 1 à 3, l'anneau (12) de maintien étant réalisé de section transversale annulaire circulaire.

5. Dispositif suivant l'une des revendications 1 à 4, le matériau de l'anneau (12) de maintien étant austénitique.

6. Dispositif suivant l'une des revendications 1 à 5, le matériau de l'anneau (12) de maintien comportant environ 12 % de chrome et environ 8 % de nickel.
